# EUROPEAN PATENT APPLICATION

(11) **EP 4 249 559 A1**
(43) Date of publication of application: **27.09.2023**
(21) Application number: 23731076.8
(22) Date of filing: 05.01.2023
(51) Int. Cl.: C08L 67/02, C08K 7/14, C08K 3/34, C03C 13/00

(54) **POLYESTER RESIN COMPOSITION, PREPARATION METHOD THEREFOR, AND MOLDED PRODUCT MANUFACTURED THEREFROM**

(30) Priority: 27.01.2022 KR 20220011940; 04.01.2023 KR 20230001101
(71) Applicant: LG CHEM, LTD., Yeongdeungpo-gu, Seoul 07336 (KR)
(72) Inventor: LEE, Ran Hee, Daejeon 34122 (KR); SONG, Chang Hee, Daejeon 34122 (KR); KWON, Tae Hun, Daejeon 34122 (KR); PARK, Jae Chan, Daejeon 34122 (KR)
(74) Representative: Goddar, Heinz J.
(86) International application number: PCT/KR2023/000183
(87) International publication number: WO 2023/146151

(57) **Abstract**

The present invention relates to a polyester resin composition, a method of preparing the same, and a molded article manufactured using the same. According to the present invention, the present invention has an effect of providing a polyester resin composition being capable of maintaining flatness and minimizing deformation even under high temperature environments by maintaining the balance between mechanical properties and heat resistance and thus being suitable for automotive parts, such as parts for electronic control units, the covers thereof, and the cover parts thereof, a method of preparing the polyester resin composition, and a molded article manufactured using the polyester resin composition.

## Description

### [Technical Field]

### [Cross-Reference to Related Applications]

This application claims priority to Korean Patent Application No. 10-2022-0011940, filed on January 27, 2022, and Korean Patent Application No. 10-2023-0001101, re-filed on January 4, 2023, based on the priority of the above patent, in the Korean Intellectual Property Office, the disclosures of each of which are incorporated herein by reference.

The present invention relates to a polyester resin composition, a method of preparing the same, and a molded article manufactured using the same. More particularly, the present invention relates to a polyester resin composition being capable of minimizing deformation and maintaining flatness even under high temperature environments by maintaining the balance between mechanical properties and heat resistance and thus being suitable for automotive parts having an integrated complex structure and a molded article including the polyester resin composition.

### [Background Art]

Polybutylene terephthalate resins (hereinafter referred to as "PBT" resins) and polyethylene terephthalate resins (hereinafter referred to as "PET" resins), which are polyester resins, have excellent mechanical and electrical properties and excellent physical and chemical properties, and thus are widely used in various fields such as automobiles, electrical and electronic devices, and office equipment.

Recently, as electric vehicles and autonomous driving technology are developed, the number of automotive parts manufactured using PBT or PET is increasing, and integration of these parts is progressing.

However, in summer, when an automobile is exposed to sunlight outdoors and the temperature inside the automobile exceeds 80 °C, there is a problem in that automobile parts are severely bent, that is, bending deformation occurs. In addition, even when bending of automotive parts is not severe, there still is a problem in that the level of flatness when an automobile is shipped from a factory cannot be maintained.

Therefore, there is a need to develop a polyester resin composition suitable for automotive parts having an integrated complex structure due to excellent low bending properties thereof, and automotive housing parts including a molded article manufactured using the polyester resin composition.

### [Related Art Documents]

### [Patent Documents]

KR 2017-0080859 A

### [Disclosure]

### [Technical Problem]

Therefore, the present invention has been made in view of the above problems, and it is one object of the present invention to provide a polyester resin composition being capable of minimizing deformation and maintaining flatness even under high temperature environments by maintaining the balance between mechanical properties and heat resistance and thus being suitable for automotive parts having an integrated complex structure.

It is another object of the present invention to provide a method of preparing the polyester resin composition.

It is yet another object of the present invention to provide a molded article manufactured using the polyester resin composition.

### [Technical Solution]

In accordance with one aspect of the present invention, provided is a polyester resin composition, including:
28 to 50 % by weight of a polybutylene terephthalate resin;
20 to 40 % by weight of a polyethylene terephthalate resin;
20.5 to 30 % by weight of a reinforcing fiber; and
5 to 30 % by weight of a layered clay mineral,
wherein the polyethylene terephthalate resin includes one or more units selected from 1,4-cyclohexanedimethanol, isophthalic acid, and butanediol.

A weight ratio (PET:layered clay mineral) of the polyethylene terephthalate (PET) resin to the layered clay mineral may be 1:0.9 to 1.8.

A weight ratio (PBT:PET) of the polybutylene terephthalate (PBT) resin to the polyethylene terephthalate (PET) resin may be 1:0.3 to 1.5.

The polybutylene terephthalate resin may have a weight average molecular weight (Mw) of 20,000 to 100,000 g/mol, and may have a melting point of 200 to 240 °C as measured using a DSC.

The polyethylene terephthalate resin may have a melting point of 200 to 270 °C as measured using a DSC.

A weight ratio (reinforcing fiber:layered clay mineral) of the reinforcing fiber to the layered clay mineral may be 1:0.1 to 0.3.

The reinforcing fiber may be a glass fiber.

The glass fiber may include 20 to 65 % by weight of silica; 1 to 40 % by weight of aluminum oxide; 10 to 60 % by weight of calcium oxide; and 5 % by weight or less of one or more selected from iron oxide, magnesia, sodium oxide, iron, and boron oxide, and may have a diameter of 7 to 15 µm and a length of 3 to 6 mm.

The layered clay mineral may include one or more selected from mica, montmorillonite, bentonite, kaolinite, hectorite, fluorohectorite, saponite, beidelite, nontronite, stevensite, vermiculite, hallosite, volkonskoite, suconite, magadite, kenyalite, and hydrotalcite.

The polyester resin composition may include one or more additives selected from a heat stabilizer, a UV stabilizer, a lubricant, a plasticizer, a flame retardant, a flame retardant aid, a colorant, a release agent, a pigment, a dye, a transesterification inhibitor, an antistatic agent, an antibacterial agent, a processing aid, a metal deactivator, a fluorine-based anti-dripping agent, and a coloring masterbatch.

Based on 100 % by weight of all components (polybutylene terephthalate resin + polyethylene terephthalate resin + reinforcing fiber + layered clay mineral + additives) constituting the polyester resin composition, the additives may be included in an amount of 0.1 to 5 % by weight.

When measuring height difference in a height direction before and after leaving a specimen having dimensions of 200 mm × 100 mm × 2T in width, length, and thickness at 100 °C for 30 minutes, the polyester resin composition may have a height difference of 0.25 mm or less.

The polyester resin composition may have a flexural modulus of 8,120 MPa or more as measured according to ISO 178.

The polyester resin composition may have a heat deflection temperature (HDT) of 190 °C or higher as measured under 1.80 MPa according to ISO75-1/2.

In accordance with another aspect of the present invention, provided is a method of preparing a polyester resin composition, including:

kneading and extruding 28 to 50 % by weight of a polybutylene terephthalate resin; 20 to 40 % by weight of a polyethylene terephthalate resin; 20.5 to 30 % by weight of a reinforcing fiber; and 5 to 30 % by weight of a layered clay mineral,

wherein the polyethylene terephthalate resin includes one or more selected from 1,4-cyclohexanedimethanol, isophthalic acid, and butanediol.

The layered clay mineral may include one or more selected from mica, montmorillonite, bentonite, kaolinite, hectorite, fluorohectorite, saponite, beidelite, nontronite, stevensite, vermiculite, hallosite, volkonskoite, suconite, magadite, kenyalite, and hydrotalcite.

In accordance with yet another aspect of the present invention, provided is a molded article, including:
the above-described polyester resin composition.

The molded article may be a part for electronic control units including an engine control unit, a transmission control unit (TCU), an electronic stability control (ESC) system, an airbag control system, a tire pressure monitoring system (TPMS), and a passive occupant detection system (PODS); a cover thereof; or a cover part thereof.

### [Advantageous Effects]

When a polyester resin composition according to the present invention is prepared, since the structure and content of a polyethylene terephthalate resin mixed with a polybutylene terephthalate resin are adjusted and the weight ratio between glass fiber and a specific layered clay mineral is adjusted, the balance between mechanical strength and heat resistance can be greatly improved, and flatness can be maintained and deformation can be minimized even under high temperature environments. Thus, the polyester resin composition is applicable to automotive parts having an integrated complex structure. In addition, when the polyester resin composition is used, manufacturing cost can be reduced.

Accordingly, the polyester resin composition of the present invention can be applied to parts for electronic control units (ECUs) including an engine control unit, a transmission control unit (TCU), an electronic stability control (ESC) system, an airbag control system, a tire pressure monitoring system (TPMS), and a passive occupant detection system (PODS); the covers thereof; or the cover parts thereof.

### [Best Mode]

Hereinafter, the present invention will be described in more detail to aid in understanding of the present invention.

The terms and words which are used in the present specification and the appended claims should not be construed as being confined to common meanings or dictionary meanings but should be construed as having meanings and concepts matching the technical spirit of the present invention in order to describe the present invention in the best fashion.

In the present invention, it is to be understood that, unless stated otherwise, when a part "comprises" any element, the part may include other elements without excluding other elements.

In this description, unless otherwise specified, "content" is given in % by weight.

In this description, the term "low bending properties" refers to maintaining the height dimension of a specimen when the specimen is left for a certain period of time under a high temperature condition with respect to the height dimension of the specimen immediately after preparation. When variation in height dimension is close to zero, the low bending properties are excellent. In addition, when there is no variation in the average height dimension between specimens, the low bending properties are excellent.

The present inventors confirmed that, to prepare a material applicable to parts for automotive electronic control units including an engine control unit, a transmission control unit (TCU), an electronic stability control (ESC) system, an airbag control system, a tire pressure monitoring system (TPMS), and a passive occupant detection system (PODS); the covers of the parts; or parts included in the covers, when a base resin consisting of a polybutylene terephthalate resin and a polyethylene terephthalate resin was mixed with predetermined components capable of minimizing deformation even under high temperature conditions in a predetermined content ratio, the balance between mechanical strength and heat resistance was greatly improved, and deformation was minimized and flatness was maintained even under high temperature environments. In particular, the present inventors confirmed that the composition of the present invention was suitable for automotive parts having an integrated complex structure. Based on these results, the present inventors conducted further studies to complete the present invention.

In one embodiment of the present invention, a polyester resin composition including a polybutylene terephthalate resin, a polyethylene terephthalate resin, a reinforcing fiber, and a layered clay mineral is provided.

The polyethylene terephthalate resin includes one or more selected from 1,4-cyclohexanedimethanol, isophthalic acid, and butanediol.

The weight ratio (PET:layered clay mineral) of the polyethylene terephthalate (PET) resin to the layered clay mineral is 1:0.9 to 1.8.

The layered clay mineral includes one or more selected from mica, montmorillonite, bentonite, kaolinite, hectorite, fluorohectorite, saponite, beidelite, nontronite, stevensite, vermiculite, hallosite, volkonskoite, suconite, magadite, kenyalite, and hydrotalcite.

The polyester resin composition of the present invention may maintain flatness and minimize deformation even under high temperature environments by controlling the structure of the polyethylene terephthalate resin mixed with the polybutylene terephthalate resin and adjusting the weight ratio between the reinforcing fiber and the layered clay mineral.

Hereinafter, each component constituting the polyester resin composition of the present invention will be described in detail.

### Polybutylene terephthalate resin

According to one embodiment of the present invention, the polyester resin composition includes a polybutylene terephthalate resin. As described above, by including the polybutylene terephthalate resin in the polyester resin composition, physical properties required for automotive parts may be realized.

In one embodiment of the present invention, as the polybutylene terephthalate resin, a polybutylene terephthalate resin obtained by polycondensation through direct esterification or transesterification of 1,4-butanediol, and terephthalic acid or dimethyl terephthalate may be used.

The polybutylene terephthalate (PBT) resin included as a base resin of the polyester resin composition of the present invention may have a repeat unit represented by Chemical Formula 1 below.

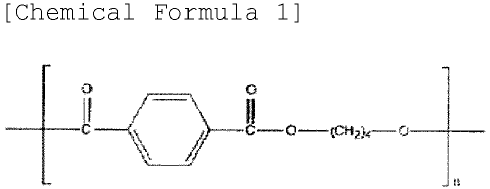

In Chemical Formula 1, n represents an integer greater than or equal to 50, as a specific example, an integer from 50 to 200.

In one embodiment of the present invention, to increase the impact strength of the polyester resin composition, a copolymer obtained by copolymerizing the polybutylene terephthalate resin and an impact strength enhancing compound such as polytetramethylene glycol, polyethylene glycol, polypropylene glycol, aliphatic polyester, aliphatic polyamide, and the like, or a modified polybutylene terephthalate resin obtained by reacting the polybutylene terephthalate resin with the impact strength enhancing compound may be used.

In one embodiment of the present invention, for example, the polybutylene terephthalate resin has an intrinsic viscosity (η) of 0.6 dl/g to 1.8 dl/g, 0.7 dl/g to 1.3 dl/g, or 0.9 dl/g to 1.3 dl/g as measured according to ASTM D2857. When the intrinsic viscosity of the polybutylene terephthalate resin is within this range, a polyester resin composition having excellent physical property balance between mechanical properties and processability may be obtained.

The intrinsic viscosity (η) may be measured at 20 °C using a filtrate obtained by dissolving a sample to be measured in methylene chloride using an Uberode-type viscosity tube.

For example, the polybutylene terephthalate resin may have a weight average molecular weight of 20,000 g/mol to 100,000 g/mol, 30,000 g/mol to 90,000 g/mol, 40,000 g/mol to 80,000 g/mol, or 50,000 g/mol to 70,000 g/mol. Within this range, mechanical properties may be improved.

When measuring weight average molecular weight, a sample having a concentration of 1 wt% is prepared by putting tetrahydrofuran (THF) and a compound in a 1 ml glass bottle. Then, after filtering a standard sample (polystyrene) and the sample through a filter (pore size: 0.45 pm), the filtered samples are injected into a GPC injector. Then, the molecular weight and molecular weight distribution of the compound may be obtained by comparing the elution time of the sample with the calibration curve of the standard sample. At this time, Infinity II 1260 (Agilient Co.) may be used as measuring instrument, and flow rate may be set to 1.00 mL/min and column temperature may be set to 40.0 °C.

For example, the polybutylene terephthalate resin may have a melting point of 200 to 240 °C or 210 to 230 °C as measured using a DSC. Within this range, mechanical properties may be maintained even under high temperature conditions.

In one embodiment of the present invention, in the base resin including the polybutylene terephthalate resin and the polyethylene terephthalate resin, the polybutylene terephthalate resin may be included in an amount of 28 to 50 % by weight, 30 to 50 % by weight, or 30 to 45 % by weight. When the polybutylene terephthalate resin is included in an amount less than the range, due to decrease in solidification rate during injection molding, problems such as increased cycle time may occur. When the polybutylene terephthalate resin is included in an amount exceeding the range, bending deformation may be severe under high temperature conditions.

Polymerization methods commonly practiced in the art to which the present invention pertains may be used to prepare the polybutylene terephthalate resin. In addition, commercially available polybutylene terephthalate resins may be used when the polybutylene terephthalate resins conform to the definition of the polybutylene terephthalate resin according to the present invention.

### Polyethylene terephthalate resin

According to one embodiment of the present invention, the polyester resin composition includes a polyethylene terephthalate resin. As described above, by including the polyethylene terephthalate resin in the polyester resin composition, physical properties required for automotive parts and the cover parts thereof may be implemented.

According to one embodiment of the present invention, as the polyethylene terephthalate resin, conventional polyethylene terephthalate resins may be used, and as a specific example, a co-polyethylene terephthalate polymer may be preferably used.

The polyethylene terephthalate resin included in the polyester resin composition of the present invention may have a repeat unit represented by Chemical Formula 2 below.

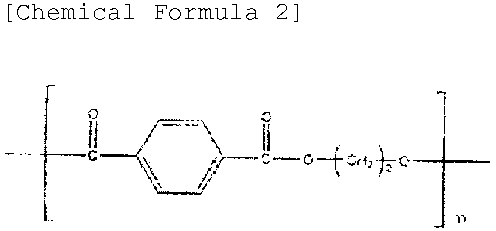

In Chemical Formula 2, m represents an integer greater than or equal to 1, as a specific example, an integer from 40 to 160.

In one embodiment of the present invention, to increase the impact strength of the polyester resin composition, a copolymer obtained by copolymerizing the polyethylene terephthalate resin and an impact strength enhancing compound such as polytetramethylene glycol, polyethylene glycol, polypropylene glycol, aliphatic polyester, aliphatic polyamide, and the like, or a modified polyethylene terephthalate resin obtained by reacting the polyethylene terephthalate resin with the impact strength enhancing compound may be used.

For example, the impact strength enhancing compound may include 1,4-cyclohexanedimethanol, isophthalic acid, and butanediol.

The impact strength enhancing compound may be included in an amount of 5 to 45 mol% or 10 to 40 mol% as a unit constituting the skeleton of the polyethylene terephthalate resin.

In one embodiment of the present invention, considering the processability and mechanical properties of the polyethylene terephthalate resin, the polyethylene terephthalate resin may have an intrinsic viscosity (IV, η) of 0.5 to 1 dl/g, preferably 0.6 to 1.0 dl/g as measured according to ASTM D2857. When the intrinsic viscosity of the polyethylene terephthalate resin is within this range, a polyester resin composition capable of providing excellent low bending properties may be obtained.

For example, the polyethylene terephthalate resin may have a melting point of 200 to 270 °C or 230 to 250 °C as measured using a DSC. Within this range, mechanical properties may be maintained under high temperature conditions.

In one embodiment of the present invention, based on a total weight of the polyester resin composition, the polyethylene terephthalate resin may be included in an amount of 20 to 40 % by weight, 20 to 35 % by weight, or 23 to 35 % by weight. Within this range, by adjusting the content of the polyethylene terephthalate resin, the mechanical properties of the polyester-based composition may be improved, and excellent low bending properties may be provided.

Polymerization methods commonly practiced in the art to which the present invention pertains may be used to prepare the polyethylene terephthalate resin. In addition, commercially available polyethylene terephthalate resins may be used when the polyethylene terephthalate resins conform to the definition of the polyethylene terephthalate resin according to the present invention.

### Reinforcing fiber

In one embodiment of the present invention, by including a reinforcing fiber in the polyester resin composition, the physical properties, such as tensile strength and flexural strength, of a molded article including the polyester resin composition may be improved.

According to one embodiment of the present invention, a glass fiber may be used as the reinforcing fiber. The glass fiber may be used in combination with other inorganic fibers, such as carbon fiber, basalt fiber, and the like, and/or natural fibers, such as kenaf, hemp, and the like.

In one embodiment of the present invention, the cross-section of the glass fiber may have a shape such as a circle, a rectangle, an oval, a dumbbell, or a rhombus. The glass fiber may have a diameter of 7 to 20 µm or 7 to 15 µm and a length of 2 to 6 mm or 3 to 6 mm. Within this range, excellent mechanical property balance may be implemented. For example, the diameter and the length may be an average diameter and an average length, respectively.

The diameter and length of the glass fiber may be measured by methods commonly used in the art. For example, the diameter and length of the glass fiber may be measured using a scanning electron microscope (SEM).

Specifically, the diameters and lengths of 50 glass fiber strands may be measured, and the average value thereof may be calculated based on the measurement results.

The cross-section of the glass fiber may have a shape such as a circle, a rectangle, an oval, a dumbbell, or a rhombus.

During fiber production or post-treatment process, the glass fiber may be treated with a sizing agent.

The sizing agent is mainly used to form good strands, and the coupling agent improves adhesion between the glass fiber, the polybutylene terephthalate resin, and the polyethylene terephthalate resin. When the coupling agent is appropriately selected and used in consideration of the types of a polybutylene terephthalate resin, a polyethylene terephthalate resin, and a glass fiber, excellent physical properties may be imparted to the polyester resin composition.

Methods of using the sizing agent may include a method of directly treating the glass fiber with the sizing agent and a method of adding the sizing agent to the polybutylene terephthalate resin or the polyethylene terephthalate resin. To sufficiently exhibit the performance of the sizing agent, the content thereof should be appropriately selected.

For example, the sizing agent may include amine-based sizing agents, acrylic sizing agents, and silane-based sizing agents such as γ-aminopropyltriethoxysilane, γ-aminopropyltrimethoxysilane, N-(beta-aminoethyl) γ-aminopropyltriethoxysilane, γ-methacryloxypropyl triethoxysilane, γ-glycidoxypropyl trimethoxysilane, and β(3,4-epoxyethyl) γ-aminopropyl trimethoxysilane.

In particular, the glass fiber of the present substrate preferably contains silica because silica may provide rigidity and mechanical properties.

For example, silica may be included in the glass fiber in an amount of 20 to 65 % by weight, preferably 25 to 60 % by weight, more preferably 30 to 55 % by weight. Within this range, by adjusting the content of the glass fiber, the impact resistance and mechanical properties of the polyester-based composition may be improved. When silica is included in an amount less than the range, the effect of improving heat resistance and mechanical properties according to the addition of the glass fiber may be insignificant. When silica is included in an amount exceeding the range, low bending properties may be significantly deteriorated.

In addition, aluminum oxide may be included in the glass fiber in an amount of, for example, 1 to 40 % by weight or 5 to 30 % by weight.

In addition, calcium oxide may be included in the glass fiber in an amount of, for example, 10 to 60 % by weight or 20 to 50 % by weight.

In addition, one or more selected from iron oxide, magnesia, sodium oxide, iron, and boron oxide may be included in an amount of 5 % by weight or less, or 0.001 to 5 % by weight.

In one embodiment of the present invention, the input amount of the reinforcing fiber may be greater than the input amount of the polyethylene terephthalate resin. In this case, the effect of reinforcing an injection product may be further increased.

As a specific example, based on a total weight of the polyester resin composition, the reinforcing fiber may be included in an amount of 20.5 to 30 % by weight or 23 to 28 % by weight. Within this range, by adjusting the content of the reinforcing fiber, the tensile strength and flexural strength of a molded article manufactured using the polyester resin composition may be improved.

### Layered clay mineral

For example, a layered clay mineral according to the present invention may include one or more selected from mica, montmorillonite, bentonite, kaolinite, hectorite, fluorohectorite, saponite, beidelite, nontronite, stevensite, vermiculite, hallosite, volkonskoite, suconite, magadite, kenyalite, and hydrotalcite. In the case of using the layered clay mineral, the layered clay mineral may provide excellent low bending properties by serving as a filler and reducing the aspect ratio by the crystal structure of the polymers constituting the base resin and the reinforcing fiber.

Based on a total weight of the polyester resin composition, the layered clay mineral may be included in an amount of 2 to 30 % by weight, 5 to 15 % by weight, or 5 to 10 % by weight. Within this range, deterioration of physical properties such as mechanical strength due to destruction of the reinforcing fiber by the layered clay mineral may be prevented, and thus excellent physical properties may be maintained.

### <Polyester resin composition>

The polyester resin composition of the present invention may include the polybutylene terephthalate resin and the polyethylene terephthalate resin in a weight ratio (PBT:PET) of 1:0.9 to 1.8. Within this range, low bending properties may be improved while maintaining mechanical properties.

For example, the weight ratio (PBT:PET) of the polybutylene terephthalate resin to the polyethylene terephthalate resin may be 1:0.9 to 1.6 or 1:1 to 1.4. Within this range, low bending properties may be improved while maintaining mechanical properties. When the weight ratio thereof is less than the range, severe bending deformation may occur under high temperature conditions. When the weight ratio thereof exceeds the range, due to decrease in solidification rate during injection molding, problems such as increased cycle time may occur.

In the polyester resin composition of the present invention, the input amount of the reinforcing fiber may be greater than the input amount of the layered clay mineral. In this case, solidification rate may be increased, and low bending properties may be improved.

For example, the reinforcing fiber may be included in an amount such that a weight ratio (reinforcing fiber:layered clay mineral) of the reinforcing fiber to the layered clay mineral is 1:0.1 to 0.3 or 1:0.15 to 0.25.

The polyester resin composition of the present invention may further include one or more additives selected from a heat stabilizer, a UV stabilizer, a lubricant, a plasticizer, a flame retardant, a flame retardant aid, a colorant, a release agent, a pigment, a dye, a transesterification inhibitor, an antistatic agent, an antibacterial agent, a processing aid, a metal deactivator, a fluorine-based anti-dripping agent, and a coloring masterbatch.

In one embodiment of the present invention, based on a total weight of the polyester resin composition, the additives may be included in an amount of 0.1 to 5 % by weight, 0.1 to 3 % by weight, or 0.1 to 1 % by weight. Within this range, the intrinsic properties of the additives may be expressed without deterioration in the physical properties of the resin composition.

As the heat stabilizer, phenolic heat stabilizers and hindered amine-based compounds may be used. As a specific example, the phenolic heat stabilizer may be pentaerythritol tetrakis(3-(3,5-di-tert-butyl-4-hydroxyphenyl)propionate).

Specifically, based on a total weight of the polyester resin composition, the heat stabilizer may be included in an amount of 0.1 to 5 % by weight, 0.1 to 3 % by weight, or 0.1 to 1 % by weight. Within this range, by adjusting the content of the heat stabilizer, the impact strength of the polyester resin composition may be excellent, the heat resistance thereof may be excellent due to an increase in heat deflection temperature, and the melt flow index thereof may be reduced.

In the present invention, as the phenolic compound, Hindered Phenolic Antioxidant 1010 may be used.

The hindered amine end group of the hindered amine-based compound may react with end groups of polymers constituting the base resin to impart hydrolysis resistance. Specifically, when using the hindered amine-based compound, gas generation during molding of the polyester-based composition may be effectively suppressed.

For example, the hindered amine-based compound may be a halogen-free alkoxy hindered amine having a weight average molecular weight of 2,200 to 2,300 g/mol. As a specific example, the hindered amine-based compound may be poly[[6-[(1,1,3,3-tetramethylbutyl)amino]-s-triazine-2,4-diyl]-[(2,2,6,6-tetramethyl-4-piperidyl)imino]-hexamethylene-[(2,2,6,6-tetramethyl-4-piperidyl)imino] (CAS number: 71878-19-8).

Based on a total weight of the polyester resin composition, the hindered amine-based compound may be included in an amount of 0.1 to 5 % by weight, 0.1 to 3 % by weight, or 0.1 to 1 % by weight. Within this range, by adjusting the content of the hindered amine-based compound, required physical properties may be implemented without impairing the hydrolysis resistance effect provided by the chain extender described above.

The lubricant may be olefin wax, and serves to help the polyester resin composition maintain excellent releasability and injection properties.

The olefin wax may be a polymer having a low melt viscosity and may be an oily solid having sliding properties and plasticity. For example, the olefin wax may include at least one selected from polyethylene wax and polypropylene wax, and commercially available olefin wax may be used.

In one embodiment of the present invention, based on a total weight of the polyester resin composition, the lubricant may be included in an amount of 0.1 to 5 % by weight, 0.1 to 3 % by weight, or 0.1 to 1 % by weight. Within this range, excellent releasability and injection properties may be provided.

The polyester resin composition may include a plasticizer that facilitates chain folding during crystal formation, such as glycerol, to control crystallization by increasing the point of a crystal nucleus.

The polyester resin composition may be preferably a polyester resin composition for cover parts of automotive parts. In this case, in addition to general parts, the automotive parts include electronic control units (ECUs) including an engine control unit, a transmission control unit (TCU), an electronic stability control (ESC) system, an airbag control system, a tire pressure monitoring system (TPMS), and a passive occupant detection system (PODS), the covers thereof, and the cover parts thereof.

When measuring height difference in the height direction before and after leaving a specimen having dimensions of 200 mm × 100 mm × 2T in width, length, and thickness at 100 °C for 30 minutes, the polyester resin composition of the present invention may have a height difference of 0.25 mm or less, 0.01 to 0.25 mm, or 0.05 to 0.25 mm. Within this range, deformation at all points of a molded article may be minimized under high temperature conditions, thereby improving low bending properties. Here, the height of the molded article is 12 mm, and the thickness thereof is 2T.

For example, the polyester resin composition may have a flexural modulus of 8,120 MPa or more, as a specific example, 8,120 to 9,000 MPa, preferably 8,130 to 8,250 MPa as measured according to ISO 178. Within this range, low bending properties may be provided under high temperature conditions while maintaining mechanical properties.

For example, the polyester resin composition may have a Charpy impact strength of 6.6 kJ/m² or more, as a specific example, 6.6 to 7.5 kJ/m², as a preferred example, 6.6 to 6.9 kJ/m² as measured according to ISO 179. Within this range, low bending properties may be provided under high temperature conditions while maintaining mechanical properties.

For example, the polyester resin composition may have a heat deflection temperature (HDT) of 190 °C or higher, as a specific example, 190 to 205 °C, as a preferred example, 190 to 200 °C as measured under a load of 1.80 MPa according to ISO 75-1/2. Within this range, low bending properties may be provided under high temperature conditions while maintaining mechanical properties.

### <Method of preparing polyester resin composition >

The polyester resin composition according to the present invention may be prepared by a method known in the art. For example, the polyester resin composition may be prepared in the form of pellets by a method of melt-extruding a mixture of components and additives in an extruder, and the pellets may be used to manufacture injection-molded articles and extrusion-molded articles.

In one embodiment of the present invention, the pellets are injected or extruded at a temperature of 240 to 300 °C or 250 to 290 °C. In addition, when injecting the pellets, the temperature of a mold is preferably 60 to 120 °C. When the mold temperature is 60 °C or less, appearance may be deteriorated. When the mold temperature is 120 °C or higher, the pellets may stick to the mold, reducing releasability and increasing cooling rate. Specifically, the mold temperature may be 60 to 100 °C, 70 to 90 °C, or 75 to 85 °C. Within this range, even when the temperature of a mold is controlled during injection molding, bending deformation at all points of an injection-molded article may be minimized, thereby improving low bending properties.

According to one embodiment of the present invention, in the process of injection-molding the injection-molded article, the injection rate of a melt product containing the polyester resin composition may be 20 to 100 mm/s. Specifically, in the process of injection-molding the injection-molded article, the injection rate of a melt product containing the polyester resin composition may be 20 to 90 m/s, 20 to 80 mm/s, or 30 to 60 mm/s. Within this range, even when the temperature of a mold is controlled during injection molding of the injection-molded article, bending deformation at all points of the injection-molded article may be minimized, thereby improving low bending properties.

For example, a method of preparing the polyester resin composition of the present invention includes a step of kneading and extruding the polyester resin composition including the polybutylene terephthalate resin, the polyethylene terephthalate resin, the reinforcing fiber, the layered clay mineral, and the additives. In this case, the physical property balance between rigidity, processability, and low bending properties may be excellent.

### <Molded article>

According to another embodiment of the present invention, a molded article manufactured using the above-described polyester resin composition is provided.

In particular, the molded article may be a part for automotive electronic control units (ECUs) including an engine control unit, a transmission control unit (TCU), an electronic stability control (ESC) system, an airbag control system, a tire pressure monitoring system (TPMS), and a passive occupant detection system (PODS), the cover thereof, or the cover part thereof.

The part for electronic control units, the cover thereof, or the cover part thereof may be manufactured by a method including a step of excluding and injecting the polyester-based composition at a molding temperature of 230 to 300 °C, preferably 250 to 290 °C. Within this range, a product without defects may be obtained, the manufacturing time may be shortened, and the manufacturing cost may be reduced.

Within this range, by adjusting the impact strength, tensile strength, and flexural strength of the molded article, the impact resistance and durability of the molded article may be improved.

In describing the polyester resin composition of the present invention, the method of preparing the same, and the molded article including the same, it should be noted that other conditions or equipment not explicitly described herein may be appropriately selected within the range commonly practiced in the art without particular limitation.

Hereinafter, embodiments of the present invention will be described in detail so that those skilled in the art can easily practice the present invention. However, the present invention may be embodied in many different forms and is not limited to the embodiments described herein. Also, in the present invention, % means % by weight unless otherwise defined.

### [Examples]

The components constituting the polyester resin composition are as follows.
(A) Polybutylene terephthalate resin (PBT, intrinsic viscosity: 0.7 to 1.12 dl/g, Mw: 10,000 to 80,000 g/mol, Thunhe Co., TH6082A)
(B) Polyethylene terephthalate resin
   (B-1) Co-PET (PET containing 5 to 50 mol% of an isophthalic acid unit, intrinsic viscosity: 0.5 to 1.0 dl/g, Mw: 5,000 to 80,000 g/mol, TK chemical Co., Tex Pet 874-C80)
   (B-2) Homo-PET (Intrinsic viscosity: 0.5 to 1.0 dl/g, Mw: 5,000 to 80,000 g/mol, SK Chemical Co., BB8055)
   (B-3) Homo-PET (Intrinsic viscosity: 1.0 to 1.2 dl/g, Mw: 5,000 to 80,000 g/mol, Huvis Co., JSB 599)
(C) Reinforcing fiber: Glass fiber having a diameter of 7 to 15 µm and a length of 3 to 6 mm and containing 40 to 50 % of silica, 10 to 20 % of aluminum oxide, and 30 to 40 % of calcium oxide (NEG Co., T-187H)
   Here, "%" means "% by weight".
(D) Layered clay mineral
   (D-1) Mica: MICA 200DX
   (D-2) Talc (KC-3000C, COTS Co.)
   (D-3) Calcium carbonate
(E) Additives
   (E-1) Heat stabilizer (Irganox 1010)
   (E-2) Lubricant: PE-based wax (Product name: LC102N)
   (E-3) Carbon black masterbatch (Product name: NB 9089)

### Examples 1 and 2 and Comparative Examples 1 to 6

According to the contents shown in Table 1 below, the polybutylene terephthalate resin (A), the polyethylene terephthalate resins (B-1) to (B-3), the reinforcing fiber (C), talc (D-1), mica (D-2), calcium carbonate (D-3), the heat stabilizer (E-1), the lubricant (E-2), and the carbon black masterbatch (E-3) were mixed and melt and kneaded at 250 to 290 °C using a twin-screw extruder (L/D=42, Φ=40 mm) to prepare a polyester resin composition in the form of pellets. Based on 100 % by weight in total of the polyester resin composition, 0.8 % by weight in total of the components (E-1) and (E-2) was added.

After drying the pelletized resin at 120 °C for more than 4 hours, the resin was injected at an injection temperature of 260 to 290 °C, a mold temperature of 80 °C, and an injection rate of 40 mm/s using a 280-ton electric injection machine (Sumitomo Co.) to prepare a specimen having dimensions of 200 mm × 100 mm × 2T in width, length, and thickness, and the specimen was stored at room temperature.

### [Test Examples]

The properties of specimens prepared in Examples 1 and 2 and Comparative Examples 1 to 6 were measured according to the following methods, and the results are shown in Table 1 below.
*Low bending properties: For the prepared specimen having dimensions of 200 mm × 100 mm × 2T in width, length, and thickness, dimensions in the height direction before and after the specimen was left at a temperature of 100 °C for 30 minutes were measured.
*Tensile strength (MPa), tensile modulus (MPa), and elongation (%): Tensile strength, tensile modulus, and elongation were measured according to ISO 527-12, respectively.
*Flexural strength (MPa) and flexural modulus (MPa): Flexural strength and flexural modulus were measured according to ISO 178.
*Charpy notch impact strength (kJ/m²): Charpy notch impact strength was measured according to ISO 179.
*Heat deflection temperature (°C): Heat deflection temperature was measured according to ISO 75.

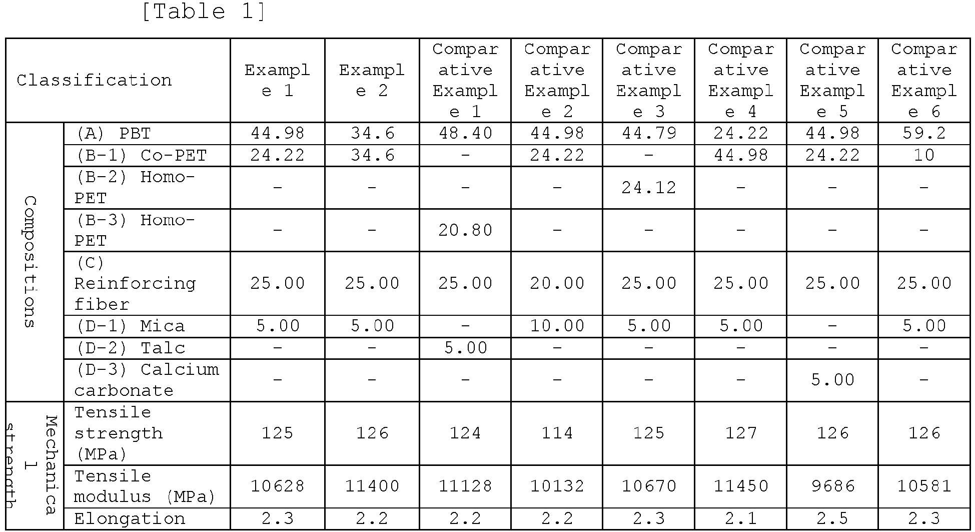

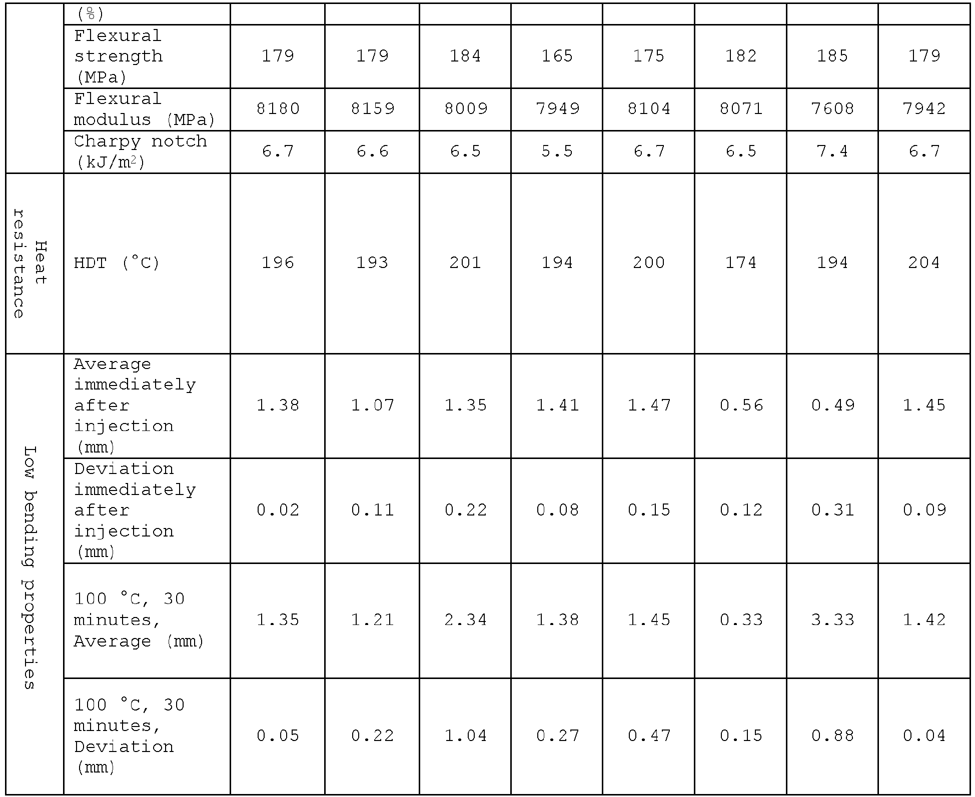

As shown in Table 1, in the case of Examples 1 and 2 according to the present invention including a polybutylene terephthalate resin; a polyethylene terephthalate resin including an isophthalic acid monomer; a reinforcing fiber; mica; and additives in a specific content ratio, the balance between mechanical strength and heat resistance was maintained, and bending deformation was minimized under high temperature conditions, thereby greatly improving low bending properties.

On the other hand, in the case of Comparative Example 1 including a polybutylene terephthalate resin; a polyethylene terephthalate resin not including an isophthalic acid monomer; a reinforcing fiber; talc; and additives, heat resistance was further improved, but low bending properties were not improved.

In addition, in the case of Comparative Example 2 in which a reinforcing fiber was added in an inappropriate content ratio compared to mica, mechanical strength was poor, and low bending properties were not improved.

In addition, in the case of Comparative Example 3 using a polyethylene terephthalate resin not including an isophthalic acid monomer, mechanical strength was poor, and low bending properties were not improved.

In addition, in the case of Comparative Example 4 including a small amount of a polybutylene terephthalate resin and an excess of a polyethylene terephthalate resin not including an isophthalic acid monomer, heat resistance was significantly reduced, and low bending properties were not improved.

In addition, in the case of Comparative Example 5 including a polybutylene terephthalate resin; a polyethylene terephthalate resin not including an isophthalic acid monomer; a reinforcing fiber; calcium carbonate; and additives, mechanical strength was significantly reduced, and low bending properties were not improved.

In addition, in the case of Comparative Example 6 including an excess of a polybutylene terephthalate resin and a small amount of a polyethylene terephthalate resin including an isophthalic acid monomer, low bending properties were deteriorated.

In conclusion, the present invention provides a polyester resin composition suitable as a material for parts for automotive electronic control units including an engine control unit, a transmission control unit (TCU), an electronic stability control (ESC) system, an airbag control system, a tire pressure monitoring system (TPMS), and a passive occupant detection system (PODS); the covers thereof, or the cover parts thereof. According to the present invention, by controlling the structure and content of a polyethylene terephthalate resin mixed with a polybutylene terephthalate resin and adjusting the weight ratio of a reinforcing fiber to a layered clay mineral, the balance between mechanical strength and heat resistance may be maintained, and flatness may be maintained even under high temperature environments, thereby minimizing deformation. Thus, the polyester resin composition of the present invention may be applied to automotive parts, the covers thereof, or the cover parts thereof.

## Claims

1. A polyester resin composition, comprising:
28 to 50 % by weight of a polybutylene terephthalate resin;
20 to 40 % by weight of a polyethylene terephthalate resin;
20.5 to 30 % by weight of a reinforcing fiber; and
5 to 30 % by weight of a layered clay mineral,
wherein the polyethylene terephthalate resin comprises one or more selected from 1,4-cyclohexanedimethanol, isophthalic acid, and butanediol.

2. The polyester resin composition according to claim 1, wherein a weight ratio of the polyethylene terephthalate (PET) resin to the layered clay mineral is 1:0.9 to 1.8.

3. The polyester resin composition according to claim 1, wherein a weight ratio (PBT:PET) of the polybutylene terephthalate (PBT) resin to the polyethylene terephthalate (PET) resin is 1:0.3 to 1.5.

4. The polyester resin composition according to claim 1, wherein the polybutylene terephthalate resin has a weight average molecular weight (Mw) of 20,000 to 100,000 g/mol, and has a melting point of 200 to 240 °C as measured using a DSC.

5. The polyester resin composition according to claim 1, wherein the polyethylene terephthalate resin has a melting point of 200 to 270 °C as measured using a DSC.

6. The polyester resin composition according to claim 1, wherein a weight ratio (reinforcing fiber:layered clay mineral) of the reinforcing fiber to the layered clay mineral is 1:0.1 to 0.3.

7. The polyester resin composition according to claim 1, wherein the reinforcing fiber is a glass fiber comprising 20 to 65 % by weight of silica; 1 to 40 % by weight of aluminum oxide; 10 to 60 % by weight of calcium oxide; and 5 % by weight or less of one or more selected from iron oxide, magnesia, sodium oxide, iron, and boron oxide, and having an diameter of 7 to 15 µm and a length of 3 to 6 mm.

8. The polyester resin composition according to claim 1, wherein the layered clay mineral comprises one or more selected from mica, montmorillonite, bentonite, kaolinite, hectorite, fluorohectorite, saponite, beidelite, nontronite, stevensite, vermiculite, hallosite, volkonskoite, suconite, magadite, kenyalite, and hydrotalcite.

9. The polyester resin composition according to claim 1, wherein, based on 100 % by weight of all components constituting the polyester resin composition, the polyester resin composition comprises 0.1 to 5 % by weight of one or more additives selected from a heat stabilizer, a UV stabilizer, a lubricant, a plasticizer, a flame retardant, a flame retardant aid, a colorant, a release agent, a pigment, a dye, a transesterification inhibitor, an antistatic agent, an antibacterial agent, a processing aid, a metal deactivator, a fluorine-based anti-dripping agent, and a coloring masterbatch.

10. The polyester resin composition according to claim 1, wherein, when measuring height difference in a height direction before and after leaving a specimen having dimensions of 200 mm × 100 mm × 2T in width, length, and thickness at 100 °C for 30 minutes, the polyester resin composition has a height difference of 0.25 mm or less.

11. The polyester resin composition according to claim 1, wherein the polyester resin composition has a flexural modulus of 8,120 MPa or more as measured according to ISO 178.

12. The polyester resin composition according to claim 1, wherein the polyester resin composition has a heat deflection temperature (HDT) of 190 °C or higher as measured under 1.80 MPa according to ISO75-1/2.

13. A method of preparing a polyester resin composition, comprising kneading and extruding 28 to 50 % by weight of a polybutylene terephthalate resin; 20 to 40 % by weight of a polyethylene terephthalate resin; 20.5 to 30 % by weight of a reinforcing fiber; and 5 to 30 % by weight of a layered clay mineral,
wherein the polyethylene terephthalate resin comprises one or more selected from 1,4-cyclohexanedimethanol, isophthalic acid, and butanediol.

14. The method according to claim 13, wherein the layered clay mineral comprises one or more selected from mica, montmorillonite, bentonite, kaolinite, hectorite, fluorohectorite, saponite, beidelite, nontronite, stevensite, vermiculite, hallosite, volkonskoite, suconite, magadite, kenyalite, and hydrotalcite.

15. A molded article, comprising the polyester resin composition according to any one of claims 1 to 12.

16. The molded article according to claim 15, wherein the molded article is a part for electronic control units comprising an engine control unit, a transmission control unit (TCU), an electronic stability control (ESC) system, an airbag control system, a tire pressure monitoring system (TPMS), and a passive occupant detection system (PODS); a cover thereof; or a cover part thereof.
